# EUROPÄISCHE PATENTSCHRIFT

(11) **EP 4 102 179 B1**
(45) Veröffentlichungstag und Bekanntmachung des Hinweises auf die Patenterteilung: **16.04.2025**
(21) Anmeldenummer: 22177075.3
(22) Anmeldetag: 02.06.2022
(51) Int. Cl.: G01C 11/00, G01W 1/02, G01W 1/10

(54) **VERFAHREN UND VORRICHTUNG ZUM VERORTEN EINER VON DER FERNE AUS AUFGENOMMENEN BILDAUFNAHME EINES OBJEKTES**
METHOD AND APPARATUS FOR LOCATING AN IMAGE OF AN OBJECT TAKEN FROM A DISTANCE
PROCÉDÉ ET DISPOSITIF POUR LOCALISER UNE IMAGE D'UN OBJET PRISE À DISTANCE

(30) Priorität: 07.06.2021 DE 102021205730
(43) Veröffentlichungstag der Anmeldung: 14.12.2022
(73) Patentinhaber: Schwarm Technologies Inc., San Francisco, CA 94107 (US)
(72) Erfinder: JÄGERS, Stefan, 72411 Bodelshausen (DE)
(74) Vertreter: Platzöder Patentanwaltsgesellschaft mbH

(56) Entgegenhaltungen:
- US-A1- 2011 220 091
- US-A1- 2014 083 413

## Beschreibung

Die vorliegende Erfindung betrifft ein Verfahren, ein Computerprogramm und eine Vorrichtung zum Verorten einer mittels zumindest einer bildgebenden Aufnahmeeinrichtung von der Ferne aus, insbesondere von großer Ferne aus, aus aufgenommenen Bildaufnahme eines Objektes, insbesondere der Erde oder eines anderen natürlichen oder künstlichen Himmelskörpers oder eines Oberflächenabschnitts davon.

Bei den Aufnahmen kann es sich insbesondere um Luftbilder oder Satellitenbilder handeln, sodass sich entsprechend die Aufnahmeeinrichtung insbesondere an oder in einem Luftfahrzeug oder Raumfahrzeug befinden kann. Dementsprechend sind insbesondere Aufnahmeentfernungen zwischen Aufnahmeeinrichtung und aufgenommenem Objekt im Bereich von einigen hundert Metern oder mehreren Kilometern bis hin zu mehr als 100 km denkbar. Die Aufnahmen können insbesondere eine Bildserie oder eine andere Gruppe von mehreren Bildern bilden, die insgesamt einen Oberflächenbereich auf dem Objekt abbilden, der zu groß ist, um auf einer einzigen der Aufnahmen vollständig abgebildet zu werden. Solche Bildserien oder Gruppen sind insbesondere im Zusammenhang mit Oberflächenkartierungen von Himmelskörpern, insbesondere der Erde bekannt, wie sie beispielsweise in heutigen gängigen Navigationsapplikationen für Smartphones und Computer benutzt werden. Dort wird das Gesamtbild der Erdoberfläche durch eine Vielzahl von überlappenden satellitengestützten Einzelaufnahmen zusammengesetzt.

Auch ist es bekannt, Wettervorhersagen auf Basis von Satellitenfotos zu erstellen, auf denen insbesondere Wolken in der Atmosphäre der Erde abgebildet sein können.

In vielen Anwendungen, wie etwa in Bezug auf Wettervorhersagen oder Planungen von Infrastrukturprojekten, wie etwa dem Bau oder dem Betrieb von Eisenbahnlinien, ist es hilfreich oder gar erforderlich, die Aufnahmen relativ zur Oberfläche des Objekts möglichst exakt zu verorten, sodass auf den Aufnahmen gezeigte Bildelemente oder gar einzelne Bildpunkte möglichst genau einer Position auf der Oberfläche des Objekts zugeordnet werden können. Eine präzise örtliche Zuordnung solcher von der Ferne aus gemachten Aufnahmen kann jedoch dadurch erschwert sein, dass die Bestimmung einer Orientierung und Position der Aufnahmeeinrichtung im Raum und/oder von Höhenunterschieden im aufgenommenen Bereich auf der Oberfläche des Objekts mit nicht vernachlässigbaren Ungenauigkeiten behaftet sein kann.

Es ist auch bekannt, Luftaufnahmen zur Steuerung von Solarkraftwerken zu nutzen, insbesondere um Abschattungen durch Wolken berücksichtigen zu können. Beispielsweise ist es aus US 2011/220091 A1 bekannt, Bilder, die Wolkenschatten in Bezug auf ein Feld von Heliostaten darstellen, zur Einstellung des Betriebs eines Solarenergiesystems zu verwenden. So können beispielsweise Bilder eines Heliostatenfeldes und der von den Wolken erzeugten Schatten gewonnen werden. Zusätzlich oder alternativ können auch Bilder des Himmels und der Wolken aufgenommen werden. Die Bilder können analysiert werden, um einen Abschattungsparameter zu bestimmen. Auf der Grundlage des Abschattungsparameters kann ein Betriebsparameter des Solarenergiesystems geändert oder beibehalten werden. Auch in US 2014/083413 A1 wird eine Echtzeitüberwachung der Wolkenabschattung zumindest eines Teils eines Solarfelds beschrieben, um einen effizienteren Betrieb eines Solarenergiesystems zu ermöglichen, da die Abschattung durch Wolken die Flussmenge auf einem Heliostaten beeinflussen kann, was sich wiederum auf die von der Solaranlage erzeugte Energie auswirken kann. Der Erfindung liegt die Aufgabe zugrunde, eine insbesondere hinsichtlich der erzielbaren Genauigkeit verbesserte Lösung zum Verorten von aus der Ferne aus aufgenommenen Bildaufnahmen eines Objektes, insbesondere von Luftbildern oder Satellitenbildern bereitzustellen.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein erster Aspekt der Erfindung betrifft ein, insbesondere computerimplementiertes, Verfahren zum Verorten einer mittels zumindest einer bildgebenden Aufnahmeeinrichtung von der Ferne aus aufgenommenen Bildaufnahme eines Objektes, gemäß Anspruch 1.

Wie bereits eingangs erwähnt, kann die Entfernung zwischen Aufnahmeeinrichtung und dem aufgenommenen Objekt insbesondere größer als einige hundert Meter oder einige Kilometer sein, wie etwa im Falle von Luftaufnahmen üblich, oder sogar, wie im Falle von raumfahrzeuggestützten Aufnahmen, etwa Satellitenaufnahmen, insbesondere größer als 100 km.

Unter einem "Erfassen" von Daten, wie etwa Bilddaten oder Messdaten ist im Sinne der Erfindung insbesondere zu verstehen, (i) dass die betroffenen Daten als solche empfangen werden, etwa über eine Datenschnittstelle einer das Verfahren ausführenden Vorrichtung, oder (ii) dass die Daten generiert werden, insbesondere mittels einer geeigneten Sensorik, wie etwa einer Bildaufnahmevorrichtung (Kamera) im Falle von Bilddaten, oder (iii) dass die Daten künstlich generiert werden, insbesondere im Rahmen einer Simulation bzw. auf Basis eines mathematischen Modells. Auch Mischformen von zwei oder mehr dieser Möglichkeiten sind denkbar, beispielsweise solche, bei denen ein Teil der Daten empfangen wird, während ein anderer Teil der Daten erst sensorisch oder per Simulation generiert wird.

Unter einem "Medium" im Sinne der Erfindung ist insbesondere eine Menge von Materie zu verstehen, die gemäß ihrer Art, Menge und Dichte in der Lage ist, elektromagnetische Strahlung in dem der Messung zugrundeliegenden Wellenlängenbereich zu blockieren oder zu modifizieren, insbesondere zu absorbieren, zu streuen oder zu reflektieren, so dass die Anwesenheit des Mediums in dem Strahlengang zwischen der Aufnahmeeinrichtung und der Sensoreinrichtung einen Einfluss auf die Intensität, Phase und/oder Wellenlänge der an der Sensoreinrichtung ankommenden Strahlung haben kann. Insbesondere kann es sich bei einem solchen Medium um eine Wolke in der Atmosphäre eines als Objekt dienenden Himmelskörpers, insbesondere Planeten, handeln. Die Wolke kann dabei insbesondere eine herkömmliche Wolke aus Wasserdampf oder Wassereis sein ("Wetterwolke"), oder aber auch eine Rauchwolke, wie etwa eine aus einer Verbrennung stammende Rauchwolke oder eine vulkanische Aschewolke oder eine Staub- oder Sandwolke (wie etwa bei einem Sandsturm).

Unter einem "Abbild" des Mediums in den Bilddaten ist im Sinne der Erfindung insbesondere ein Bildbereich der durch die Bilddaten repräsentierten Bildaufnahme zu verstehen, der das Medium zumindest teilweise abbildet. Beispielsweise kann ein Medium in Form einer herkömmlichen Wetterwolke im sichtbaren Wellenlängenbereich auf der Bildaufnahme mittels entsprechender Farbgebung als z.B. weiße oder graue Fläche dargestellt sein. Auch Falschfarbenbilder sind dabei möglich.

Unter einem "Abbild" des Mediums in den Messdaten ist im Sinne der Erfindung insbesondere ein Flächenbereich auf dem Oberflächenabschnitt zu verstehen, in dem zumindest eine der Sensoreinrichtungen liegt, wobei die von ihr gelieferten Messdaten die Messung einer durch das Medium bewirkten, Dämpfung, insbesondere Intensitätsreduktion, der auf die Sensoreinrichtung einfallenden elektromagnetischen Strahlung, insbesondere Sonnenstrahlung, anzeigen. Der Flächenbereich liegt somit in einem durch das Medium bewirkten "Schatten".

Im Sinne der Erfindung "korrespondieren" Abbildungsanteile der beiden in den Bilddaten bzw. den Messdaten repräsentierten Abbilder bezüglich ihres jeweiligen Abbildungsinhalts insbesondere dann zueinander, wenn die korrespondierenden Abbildungsanteile (Bildausschnitte oder Bildpunkte der Bildaufnahme bzw. Messwerte der Sensoreinrichtunge(en)) jeweils entweder beide das Vorhandensein oder aber beide die Abwesenheit bzw. das Fehlen einer (Teil-)Abbildung des Mediums in dem jeweiligen Abbildungsanteil repräsentieren.

Die Ortsinformation kann insbesondere mittels geeigneter Koordinaten in einem bezüglich des Obejekts oder seiner Oberfläche oder eines Abschnitts davon definierten globalen oder lokalen Koordinatensystems definiert sein. Im Falle der Erde als Objekt können insbesondere herkömmliche Geokoordinatensysteme hierzu verwendet werden, vorzugsweise solche, die neben Winkelkoordinaten (z.B. Längen- und Breitenkoordinaten) auch Höhenkoordinaten (etwa Höhe über Normal Null) verwenden, um einen Ort auf der Oberfläche des Objekts zu lokalisieren.

Bei dem Verfahren nach dem ersten Aspekt kann durch das Abgleichen der Bilddaten und der Messdaten insbesondere eine zumindest teilweise Kompensation von optischen Verzerrungen, die sich vor allem bei der 2D-Bildaufnahme einer gekrümmten 3D-Objektoberfläche, wie etwa der Erdoberfläche, typischerweise ergeben, auf einfache Weise erreicht und so auch die erreichbare Genauigkeit der Verordnung der Bildaufnahme verbessert werden.

Die erfassten Bilddaten weisen für verschiedene Aufnahmezeitpunkte jeweils eine digitale Bildaufnahme zumindest eines Oberflächenabschnitts des Objekts auf, in dem sich die Sensoreinrichtung befindet. Das Verfahren wird zudem auf solche Weise mit mehreren Iterationen ausgeführt, dass: (i) verschiedene Iterationen jeweils zu einem anderen der Aufnahmezeitpunkte korrespondieren (was insbesondere so erfolgen kann, dass die Iterationen nach der zeitlichen Abfolge der Aufnahmezeitpunkte geordnet sind); (ii) in jeder Iteration nur solche Bildpunkte der digitalen Bildaufnahme zur weiteren Verarbeitung in der jeweils nächstfolgenden Iteration beibehalten werden, bei denen in der jeweils aktuellen Iteration und gegebenenfalls allen vorangegangenen Iterationen im Rahmen des Abgleichens der Bilddaten und der Messdaten für den zugehörigen Aufnahmezeitpunkt und die Sensoreinrichtung eine Übereinstimmung bezüglich der jeweiligen Abbildungsinhalte im Hinblick auf ein Vorhandensein bzw. Fehlen eines etwaigen zum jeweiligen Aufnahmezeitpunkt in dem Strahlengang befindlichen Mediums festgestellt wurde; und (iii) nach einer bestimmten Enditeration die Position der Sensoreinrichtung in der Bildaufnahme auf Basis zumindest eines der bis dahin noch verbliebenen Bildpunkte bestimmt wird. Die aufeinanderfolgenden Iterationen wirken somit ähnlich einem Filter bezüglich der Bildpunkte, so dass nach und nach die Anzahl der noch verbliebenen Bildpunkte regelmäßig so stark reduziert wird, das auf Basis des bzw. der nach der Enditeration noch verbliebenen Bildpunkte und der bekannten Ortsinformation für die Sensoreinrichtung eine Verortung der Sensoreinrichtung in der digitalen Bildaufnahme und damit auch eine Verortung der Bildaufnahme als solche in einem globalen oder lokalen Koordinatensystem mit hoher Genauigkeit erfolgen kann.

Als ein Kriterium für das Feststellen, ob in den Bilddaten ein bestimmter Bildpunkt ein Vorhandensein oder Fehlen eines Abbilds eines Mediums repräsentiert, kann insbesondere eine dem Bildpunkt durch die Bilddaten zugeordnete Intensität bzw. Helligkeit und/oder Farbe herangezogen werden. Als ein Kriterium für das Feststellen, ob die Messdaten das Vorhandensein oder Fehlen des Mediums anzeigen, kann insbesondere eine durch die Sensoreinrichtung detektierte Intensität bzw. Helligkeit und/oder Farbe bzw. Wellenlänge der detektierten elektromagnetischen Strahlung (insbesondere im sichtbaren Spektralbereich) herangezogen werden. Insbesondere dann, wenn als Medium Staub-, Sand- oder Aschewolken dienen sollen, können zusätzlich oder anstelle von Bilddaten, die Bildaufnahmen im sichtbaren Spektralbereich repräsentieren, auch Bilddaten verwendet werden, die Bildaufnahmen im Wellenlängebereich von Radarstrahlung (Radiofrequenzbereich, z.B. Millimeterwellen oder Zentimeterwellen) repräsentieren.

Nachfolgend werden beispielhafte Ausführungsformen des Verfahrens beschrieben, die jeweils, soweit dies nicht ausdrücklich ausgeschlossen wird oder technisch unmöglich ist, beliebig miteinander sowie mit den weiteren beschriebenen anderen Aspekten der Erfindung kombiniert werden können.

Bei einigen der auf Iteration beruhenden Ausführungsformen wird die Enditeration als eine der folgenden bestimmt: (i) die letzte Iteration, nach der noch zumindest m, insbesondere zusammenhängende, Bildpunkte verblieben sind, wobei m ≥ 1 gilt; (ii) die k-te Iteration, nach der noch zumindest m, insbesondere zusammenhängende, Bildpunkte verblieben sind, wobei m und k natürliche Zahlen sind und m ≥ 1, k > 1 gilt. Auf diese Weise kann zum einen sichergestellt werden, dass nach der Enditeration zumindest einen durch den Parameter m definiert Anzahl von Bildpunkten vorhanden ist, auf deren Basis die Verortung der Sensoreinrichtung in der digitalen Bildaufnahme und damit auch der Bildaufnahme als solche erfolgen kann. Bei Option (ii) ist zudem sichergestellt, dass die Anzahl der Iterationen absolut begrenzt ist, was insbesondere dann relevant werden kann, wenn bei mehreren aufeinanderfolgenden Iterationen aufgrund einer zeitlich kaum veränderten Konstellation von Aufnahmegerät und Medium die Reduktion der Bildpunkte im Rahmen der Iteration nur langsam voranschreitet. So kann mittels geeigneter Wahl der Parameter m und k, insbesondere variabel, ein jeweils (aktuell) gewünschter Kompromiss zwischen Geschwindigkeit und Genauigkeit der Verortung definiert werden.

Bei einigen Ausführungsformen wird, wenn anhand der Bilddaten und/oder der Messdaten das Vorhandensein eines strahlungsschwächenden Mediums in dem Strahlengang festgestellt wird, die auf die Sensoreinrichtung einfallende Strahlung einer Spektralanalyse unterzogen, um auf die Art der in dem Medium vorhandenen Materie zu schließen. Da verschiedenen Medien, (wie etwa Wasserdampf, Wassertropfen, Flugzeugabgase, Vulkanasche, Sand oder Staub) typischerweise verschiedene optische Spektren, insbesondere Absorptionsspektren, der an der Sensoreinrichtung detektierten Strahlung bewirken, lassen sich so Rückschlüsse auf die Art des Mediums, insbesondere von einer oder mehreren darin enthaltener Materiearten und vorzugsweise auch auf deren relativen Häufigkeiten oder Konzentrationen, ziehen.

Bei einigen Ausführungsformen weist das Verorten der Bildaufnahme des Weiteren ein Bestimmen zumindest einer weiteren Ortsinformation für eine weitere ausgewählte Position in der Bildaufnahme in Abhängigkeit von der für die Sensoreinrichtung bestimmten Position und ihrer zugeordneten bekannten Ortsinformation auf. Auf diese Weise kann für weitere Positionen auf der Bildaufnahme eine Verortung erfolgen, insbesondere so, dass über eine Menge von mehreren solcher zusätzlich bestimmten Positionen eine Abdeckung der Bildaufnahme auf solche Weise erreicht wird, dass keiner der Bildpunkte weiter als eine vorgegebene Entfernung von zumindest einem der verorteten Bildpunkt entfernt ist.

Bei einigen Ausführungsformen weist das Verfahren des Weiteren auf: Verwenden von Daten, welche die verortete Bildaufnahme einschließlich der zugeordneten Ortsinformationen repräsentieren, als Eingangsdaten für ein oder mehrere meteorologische Modelle, um darauf basierend eine Wettervorhersage für zumindest einen Teilbereich des von der Bildaufnahme abgedeckten Oberflächenabschnitts des Objekts zu erstellen und diese Wettervorhersage repräsentierende Wettervorhersagedaten zu erzeugen und bereitzustellen. Aufgrund der verfahrensgemäß erreichbaren hohen Genauigkeit bei der Verortung von Bildaufnahmen, insbesondere von Wettersatellitenbildern, lassen sich so die auf den Bildaufnahmen jeweils detektierbaren Wetterereignisse, wie etwa Wolkenarten und Formationen und bei Betrachtung einer zeitlichen Abfolge von Bildaufnahmen auch von der Dynamik solcher Wolken mit hoher Genauigkeit verorten, was eine Verbesserung der Vorhersagequalität und -zuverlässigkeit von darauf beruhenden Wettervorhersagen fördern kann. Die kann insbesondere bei Wettervorhersagen für Regionen mit stark heterogener Oberflächenstruktur oder markanten Oberflächengegebenheiten (z.B. Gebirge, Flüsse, Seen, Meeresküste) besondere Relevanz gewinnen.

Insbesondere kann bei einigen dieser Ausführungsformen das Verfahren des Weiteren ein Steuern oder Konfigurieren einer technischen Vorrichtung oder eines technischen Systems in Abhängigkeit von den Wettervorhersagedaten aufweisen. Insbesondere kann dabei das Steuern oder Konfigurieren bezüglich einer oder mehrerer Funktionalitäten oder Konfigurationsmöglichkeiten der folgenden technischen Vorrichtungen bzw. System erfolgen: (i) eine Anlage oder ein System zur Herstellung von Produkten; (ii) eine Anlage oder ein System zur Gewinnung von elektrischer Energie (z.B. wetterabhängige Kraftwerkssteuerung); ein Verteilnetz für Energie (z.B. Smart Grid oder Kanalsystem für Wasserkraftwerke); (iii) ein Verkehrsweg oder Verkehrsnetz (z.B. Eisenbahnstrecke oder Eisenbahnnetz oder Straße bzw. Straßennetz mit steuerbarer Verkehrsinfrastruktur, wie etwa Signalanlagen oder Informationanzeigevorrichtungen); (iv) ein Fahrzeug oder ein Verbund von miteinander auf koordinierte Weise zu bewegenden Fahrzeugen (z.B.. Beispielsweise ist der Stromverbrauch von Elektroloks oftmals temperatur- und somit wetterabhängig.

Bei einigen Ausführungsformen erfolgt das Abgleichen der Bilddaten und der Messdaten unter Verwendung eines maschinenlernen-basierten Verfahrens mit den Bildaten und den Messdaten als Eingangsdaten. Insbesondere können ein oder mehrere künstliche (trainierte) neuronale Netze eingesetzt werden, um eine Klassifikation von Bildpunkten der Bildaufnahme(n) dahingehend zu erreichen, ob diese den Ort, an dem sich die Sensoreinrichtung befindet (mit)abbilden. Als Inputdaten können dem bzw. neuronalen Netz(en) dabei insbesondere die Bilddaten, die Messdaten sowie ein oder mehrere Kriterien, anhand derer für einen Bildpunkt bestimmt werden kann, ob sein Bildpunktwert ein Vorhandensein oder Fehlen eines Mediums anzeigt, zugeführt werden.

Bei einigen dieser Ausführungsformen werden die Wettervorhersagedaten für einen bestimmten Vorhersagezeitraum zusammen mit dazu korrespondierenden tatsächlich gemessenen Wetterdaten als Trainingsdaten oder Validierungsdaten für das weitere Trainieren bzw. Validieren des maschinenlernen-basierten Verfahrens eingesetzt. So kann insbesondere ein Training im Sinne des Überwachten Lernes (engl. Supervised Learning) durchgeführt werden, um das zumindest eine neuronale Netz vorab oder fortlaufend für seinen Einsatz vorzubereiten bzw. weiter zu optimieren.

Bei einigen Ausführungsformen wird dem maschinenlernen-basierten Verfahren zumindest ein Klassifikationskriterium als (weitere) Eingangsgröße zur Verfügung gestellt, anhand dessen gegebenenfalls ein sowohl in den Bilddaten als auch in den Messdaten repräsentiertes Abbild des Mediums seiner Art nach klassifiziert werden kann. Die Klassifikation kann sich insbesondere auf die Art und/oder die Menge und/ oder Konzentration von in dem Medium enthaltener Materie beziehen. Beispielsweise kann das Klassifikationskriterium so definiert sein, dass des Reflektion oder Absorption von elektromagnetischer Strahlung durch das Medium bei verschiedenen Wellenlängenbereichen berücksichtigt, so dass es damit möglich wird, mit Hilfe des Verfahrens durch verschiedene Reflektions- bzw. Absorptionseigenschaften gekennzeichnete Materiewolken, wie etwa Wasserdampfwolken, Regenwolken, Eiswolken, Sand- und Staub- oder Aschewolken, zumindest paarweise voneinander zu unterscheiden.

Bei einigen Ausführungsformen wird das Verfahren bezüglich einer Mehrzahl von an verschiedenen Orten auf dem Objekt befindlichen Sensorvorrichtungen ausgeführt. Zudem erfolgt das Verorten der Bildaufnahme entsprechend auf Basis der Bestimmung der den jeweiligen Orten der Sensoreinrichtungen entsprechenden Positionen in der Bildaufnahme mittels des Abgleichs und des Zuordnens der jeweiligen Ortsinformationen der Sensoreinrichtungen zu der für sie jeweils bestimmten Position erfolgt. Auf diese Weise beruht die Verortung der Bildaufnahme auf mehreren Postionsbestimmungen, so dass die erreichbare Genauigkeit für die Verortung der Bildaufnahme insbesondere auch im Hinblick auf ihre Orientierung, noch weiter gesteigert werden kann. Insbesondere kann auf Basis der verschiedenen bestimmten Positionen eine Verortung der Bildaufnahme durch Anwendung eines Optimierungsverfahrens erreicht werden, das insbesondere so definiert sein kann, dass es die Summe der Abweichungen (über die verschiedenen Sensoreinrichtungen summiert), die sich gegebenenfalls jeweils zwischen je einem Bildpunkt, der den Ort einer zugeordnete Sensoreinrichtung abbildet, und einem (ggf. anderen) der bekannten Ortsinformationen für diese Sensoreinrichtung entsprechenden Bildpunkt auf der verorteten Bildaufnahme minimiert wird.

Bei einigen Ausführungsformen weist zumindest eine der Sensorvorrichtungen eine Solaranlage auf, mit der das jeweils zugehörige Messsignal in Abhängigkeit von der von der Solaranlage zum jeweiligen Aufnahmezeitpunkt generierten elektrischen Energie erzeugt wird. Insbesondere kann somit der von der Solaranlage erzeugte Solarstrom oder einen davon abhängige Größe als Messignal dienen. Da Solaranlagen in vielen Gegenden der Erde an vielen Stellen verteilt aufgestellt sind, kann somit für die Erzeugung der Messdaten auf bereits vorhandene Infrastruktur zurückgegriffen werden, deren genauer Ort in aller Regel auch bereits vorab bekannt und oftmals sogar amtlich registriert ist.

Bei einigen Ausführungsformen umfasst das Erfassen der Bilddaten ein Erfassen von Bildmaterial bezüglich des Objekts, das mittels einer von einem Fluggerät, einem Raumfahrzeug oder einem Satelliten getragenen Aufnahmevorrichtung erzeugt wurde. Das Fluggerät kann insbesondere ein bemannte Flugzeug oder eine (unbemannte) Drohne sein. Als Satelliten kommen insbesondere Wettersatelliten, Erd- oder Planetenbeobachtungssatelliten oder, insbesondere bemannte, Raumstationen in Frage.

Ein zweiter Aspekt der Erfindung betrifft eine Vorrichtung zur Verorten einer mittels zumindest einer bildgebenden Aufnahmeeinrichtung von der Ferne aus aufgenommenen Bildaufnahme eines Objektes, insbesondere der Erde oder eines anderen natürlichen oder künstlichen Himmelskörpers oder eines Oberflächenabschnitts davon, wobei die Vorrichtung konfiguriert ist, das Verfahren gemäß dem ersten Aspekt auszuführen.

Ein dritter Aspekt der Erfindung betrifft ein Computerprogramm oder ein nicht-flüchtiges computerlesbares Speichermedium, mit Anweisungen, die bei ihrer Ausführung auf einem Computer oder einer Multi-Computer-Plattform bewirken, insbesondere auf der Vorrichtung gemäß dem zweiten Aspekt, dass dieser bzw. diese das Verfahren nach dem ersten Aspekt ausführt.

Das Computerprogramm kann insbesondere auf einem nichtflüchtigen Datenträger gespeichert sein. Bevorzugt ist dies ein Datenträger in Form eines optischen Datenträgers oder eines Flashspeichermoduls. Dies kann vorteilhaft sein, wenn das Computerprogramm als solches unabhängig von einer Prozessorplattform gehandelt werden soll, auf der das ein bzw. die mehreren Programme auszuführen sind. In einer anderen Implementierung kann das Computerprogramm als eine Datei auf einer Datenverarbeitungseinheit, insbesondere auf einem Server vorliegen, und über eine Datenverbindung, beispielsweise das Internet oder eine dedizierte Datenverbindung, wie etwa ein proprietäres oder lokales Netzwerk, herunterladbar sein. Zudem kann das Computerprogramm eine Mehrzahl von zusammenwirkenden einzelnen Programmodulen aufweisen. Die Module können insbesondere dazu konfiguriert sein oder jedenfalls so einsetzbar sein, dass sie im Sinne von verteiltem Rechnen (engl. "Distributed computing" auf verschiedenen Geräten (Computern bzw.

Prozessoreinheiten ausgeführt werden, die geografisch voneinander beabstandet und über ein Datennetzwerk miteinander verbunden sind.

Der Computer bzw. die Multi-Computer-Plattform bzw. die Vorrichtung nach dem zweiten Aspekt kann entsprechend einen oder mehrere Programmspeicher aufweisen, in dem bzw. denen das Computerprogramm abgelegt ist. Alternativ kann der Computer bzw. die Multi-Computer-Plattform bzw. die Vorrichtung auch eingerichtet sein, über eine Kommunikationsverbindung auf ein extern, beispielsweise auf einem oder mehreren Servern oder anderen Datenverarbeitungseinheiten verfügbares Computerprogramm zuzugreifen, insbesondere um mit diesem Daten auszutauschen, die während des Ablaufs des Verfahrens bzw. Computerprogramms Verwendung finden oder Ausgaben des Computerprogramms darstellen.

Die Vorrichtung nach dem zweiten Aspekt kann somit insbesondere ein Computer oder eine Multi-Computer-Plattform, insbesondere mit mehreren vernetzten Computern, sein, die mittels eines oder mehrerer Computerprogramme nach dem zweiten Aspekt konfiguriert ist, das Verfahren nach dem ersten Aspekt auszuführen, um damit eine oder mehrere mittels zumindest einer bildgebenden Aufnahmeeinrichtung von der Ferne aus, insbesondere von großer Ferne aus, aus aufgenommenen Bildaufnahme(n) eines Objektes zu verorten.

Die in Bezug auf den ersten Aspekt der Erfindung erläuterten Merkmale und Vorteile gelten entsprechend auch für die weiteren Aspekte der Erfindung.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt:
**Fig.** 1 schematisch ein beispielhaftes Szenario für eine sensorische Erfassung von Bildaufnahmen und Strahlungsmessswerten zu Verwendung im Rahmen des erfindungsgemäßen Verfahrens zum Verorten von Bildaufnahmen.
**Fig.** 2 ein Flussdiagramm zur Veranschaulichung einer bevorzugten Ausführungsform des erfindungsgemäßen Verfahrens;
**Fig.** 3 ein Flussdiagramm zur detaillierteren Veranschaulichung einer iterativen Bildauswertung im Rahmen einer bevorzugten Ausführungsform des erfindungsgemäßen Verfahrens, insbesondere des Verfahrens aus Fig. 2;
Fig. 4 schematisch eine beispielhafte zeitliche Abfolge von Bildaufnahmen und deren Auswertung im Rahmen einer auf einer iterativen Bildauswertung beruhenden beispielhaften Ausführungsform des erfindungsgemäßen Verfahrens, insbesondere des Verfahrens aus den Figuren 2 und 3;
Fig. 5 schematisch ein Diagramm zur Illustration einer auf maschinenlernen, insbesondere auf Basis eines künstlichen neuronalen Netzes, beruhenden Auswertung einer Bildaufnahme und von korrespondierenden, mittels einer Sensoreinrichtung erfassten Messdaten zur Bestimmung von einem oder mehreren Bildpunkten, die in der Bildaufnahme zur Postion der Sensoreinrichtung repräsentieren bzw. diese (mit-)abbilden.

In den Figuren werden durchgängig dieselben Bezugszeichen für dieselben oder einander entsprechenden Elemente der Erfindung verwendet.

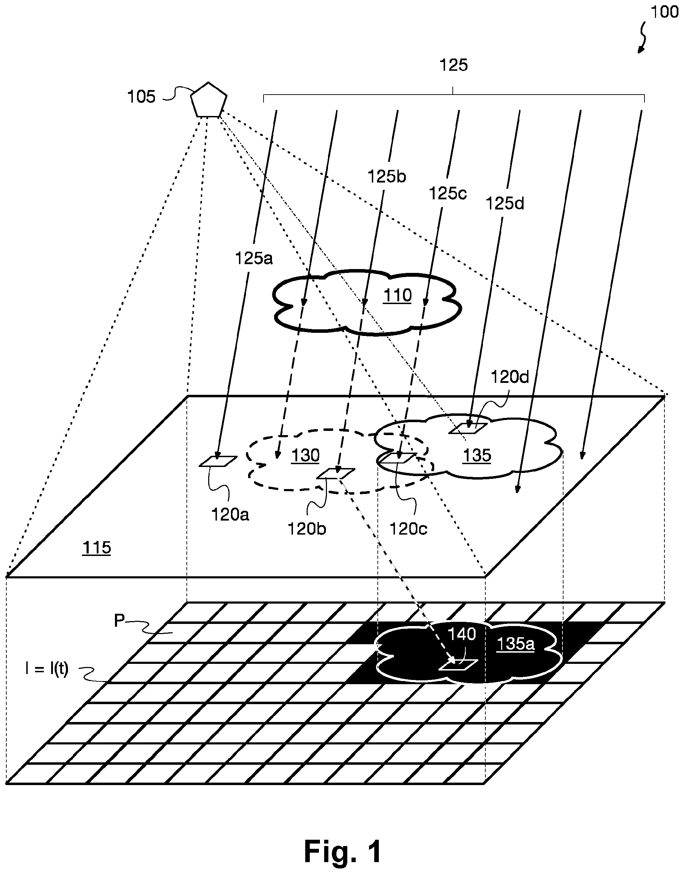

Fig. 1 illustriert ein beispielhaftes Szenario 100, vor dessen Hintergrund im Weiteren unter Bezugnahme auf die anderen Figuren beispielhafte Ausführungsformen des erfindungsgemäßen Verfahrens erläutert werden sollen.

Bei dem Szenario 100 handelt es sich um ein Erdbeobachtungsszenario, bei dem von einer satelliten- oder flugzeuggestützten Aufnahmeeinrichtung 105 aus ein Oberflächenabschnitt 115 der Erdoberfläche fotografiert wird, um zu einem Zeitpunkt t eine (im unteren Teil der Fig. 1 zu Illustrationszwecken versetzt dargestellte) Bildaufnahme I = I(t) zu erzeugen, welche den Oberflächenabschnitt 115 abbildet. Bei der Bildaufnahme I handelt es sich um eine digitale zweidimensionale Bildaufnahme, die ein matrixförmiges Raster aus Bildpunkten (Pixeln) P aufweist.

Zwischen der Aufnahmeeinrichtung 105 und dem Oberflächenabschnitt 115 befindet sich ein Medium 110, das insbesondere eine Wolke in der Erdatmosphäre sein kann. Die Wolke kann insbesondere eine herkömmliche "Wetterwolke" sein, die im Wesentlichen aus Wassertröpfchen und/oder Eiskristallen besteht, oder aber eine Staubwolke, eine Sandwolke (z.B. als Folge eines Sandsturms) oder eine Aschewolke (z.B. als Folge eines Vulkanausbruchs). Im Folgenden wird angenommen, dass es sich bei dem Medium um eine herkömmliche Wetterwolke handelt. Die Bildaufnahme I zeigt entsprechend ein Abbild 135 des Mediums 110. Derartige Bildaufnahmen sind insbesondere aus satellitengestützt erzeugten Wetterbildern bekannt.

Das Medium 110 hat aufgrund seiner Zusammensetzung die Eigenschaft, zumindest in bestimmten Wellenlängenbereichen elektromagnetische Strahlung 125, beispielsweise sichtbares Licht, zu dämpfen oder gar vollständig zu blockieren, insbesondere durch Absorption, Streuung und/oder Reflexion. Daher ergibt sich beim Vorhandensein des Mediums unter Sonneneinstrahlung 125 ein Schatten 130 auf dem Oberflächenabschnitt 115. Beispielhaft sind hier als Teil der Strahlung 125 Sonnenstrahlen 125a bis 125d gekennzeichnet, wobei die gestrichelt dargestellten Abschnitte der Sonnenstrahlen die durch das Medium 110 bewirkte Dämpfung, insbesondere Intensitätsreduktion, anzeigen sollen. Da die Entfernung der Sonne von der Erdoberfläche sehr groß ist, kann, wie hier dargestellt, in guter Näherung modellhaft davon ausgegangen werden, dass die Sonnenstrahlen im Wesentlichen parallel zueinander verlaufen (Streuungseffekte in der Erdatmosphäre werden hierbei vernachlässigt).

Auf dem Oberflächenabschnitt 115 befinden sich an verschiedenen Orten Sensoreinrichtungen 120a bis 120d für elektromagnetische Strahlung, wobei es sich insbesondere um Solaranlagen handeln kann. Insbesondere kann der gemessene Solarstrom der jeweiligen Solaranlange dann als Messsignal für die Intensität der auf die jeweilige Solaranlage eingestrahlten Sonnenstrahlung 125 genutzt werden. Liegt eine Solaranlage im Schatten 130 des Mediums 110, so fällt ihr Solarstrom umso geringer aus, je stärker die durch das Medium 110 bewirkte Dämpfung ausfällt (jedoch nicht zwingend gemäß einem linearen Zusammenhang). Andererseits fällt der Solarstrom bei Abwesenheit des Mediums 110 bzw. wenn sich die Solaranlage nicht im Schatten 130 befindet höher aus, bis hin zu einem bauartbedingten Maximalwert. Somit kann aus der Messung des Solarstroms auf das Vorhandensein des Mediums 110 im Lichtweg (Strahlengang) zwischen der Sonne und der Solaranlage geschlossen werden. In dem Beispiel aus Fig. 1 werden deshalb die nicht vom Medium 110 abgeschatteten Solaranlagen 120a und 120d relativ zu ihrem jeweiligen Maximalwert einen höheren Solarstrom messen als die im Schatten 130 liegenden Solaranlagen 120b bzw. 120c. Die Messdaten der im Schatten 130 liegenden Sensoreinridhtungen bzw. Solaranlagen 120b bzw. 120c repräsentieren somit (zumindest abschnitts- oder punktweise) den Schatten 130 und somit ein Abbild des Mediums 110.

Da die Richtung, aus der die Bildaufnahme I mittels der Aufnahmeeinrichtung 105 aufgenommen wird, in der Regel nicht mit der Einfallsrichtung der Sonnenstrahlung 125 zusammenfällt, fallen die Lage des Abbilds 135 und des Schattens 130 des Mediums 110 meist nicht zusammen, wenn man im Rahmen eines Vergleichs die Lage des Schattens 130 in die Bildaufnahme I überträgt.

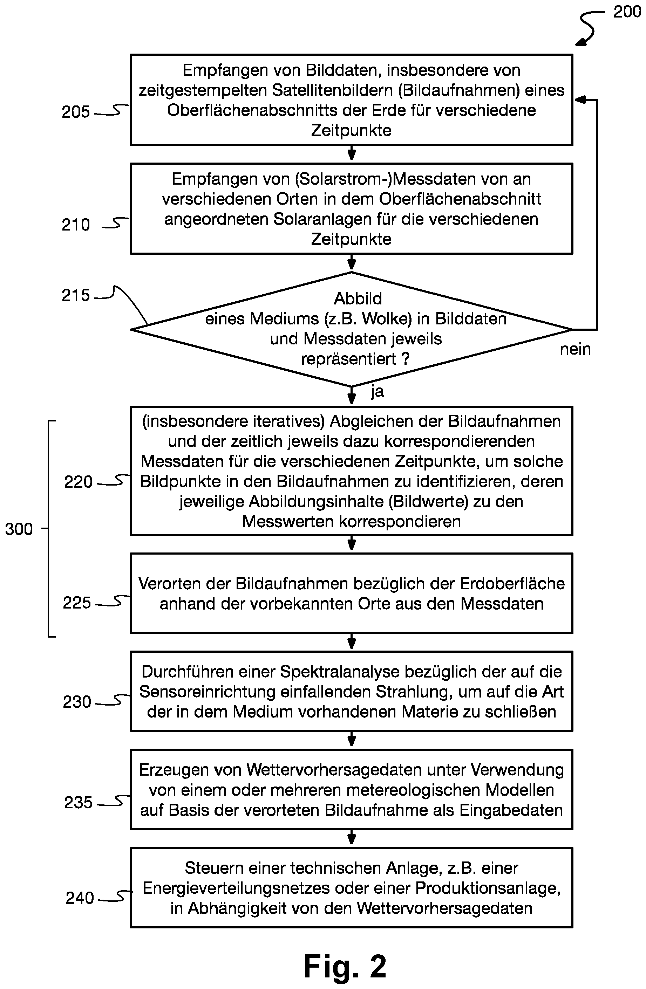

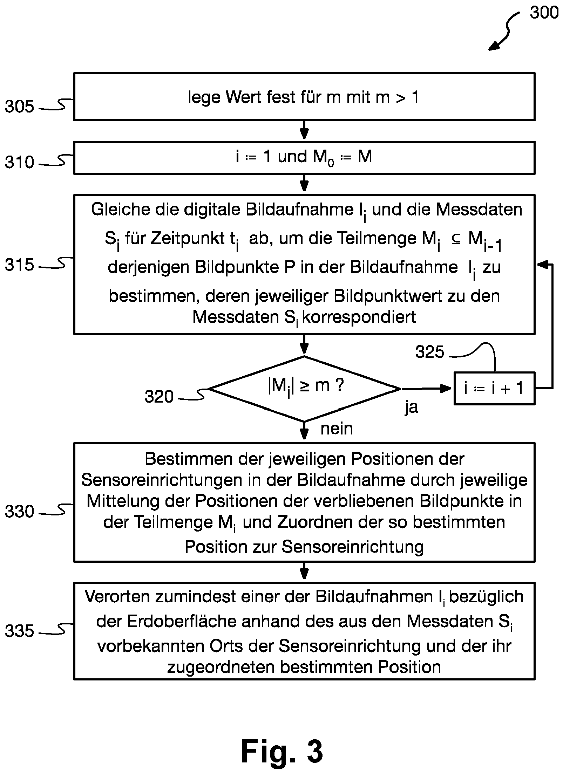

Im Rahmen einer Transformation, deren Transformationsparameter insbesondere im Rahmen eines Optimierungsproblems gefunden werden können, bei dem das Abbild des Schattens 130 in der Bildaufnahme die und des Abbilds 135 des Mediums 110 optimal übereinandergelegt werden, bestimmt werden. Es ist auch möglich, die Transformationsparameter aus einer gegebenenfalls vorab bekannten Position der Aufnahmeeinrichtung 105 zum Zeitpunkt t sowie des Aufnahmewinkels zur Erzeugung der Bildaufnahme relativ zum Oberflächenabschnitt 115 sowie der Position der Sonne, zumindest näherungsweise, geometrisch zu berechnen. Auf Basis der bestimmten Transformationsparameter kann dann die jeweilige Lage der Sensoreinrichtungen 120a bis 120d in die Bildaufnahme die transformiert werden. Dies ist beispielhaft für die Sensoreinrichtung 120b in Fig. 1 illustriert, wobei sie, da sie im Schatten 130 liegt, korrespondierend dazu in dem von dem Abbild 135a des Mediums eingenommenen Bildbereich der Bildaufnahme I liegt. Die entsprechenden Bildpunkte, welche das Abbild 135a darstellen, sind hier zum Zwecke der Illustration schwarz markiert. Eine solche Transformation kann insbesondere im Rahmen des unter Bezugnahme auf die Figuren 2 und 3 nachfolgend beschriebenen beispielhaften Verfahrens genutzt werden.

Fig. 2 zeigt eine beispielhafte Ausführungsform 200 eines erfindungsgemäßen Verfahrens zum Verorten einer oder mehrerer Bildaufnahmen, das im Folgenden, insbesondere auch unter beispielhafter Bezugnahme auf Fig. 1, erläutert wird.

In dem Verfahren 200 werden in einem Schritt 205 Bilddaten empfangen, die insbesondere eine Mehrzahl von durch die satelliten- oder flugzeuggestützte Aufnahmeeinrichtung 105 gemachten Bildaufnahmen repräsentieren können, die jeweils demselben Oberflächenabschnitt 115 der Erde für verschiedene Zeitpunkte tᵢ mit i = 1, 2, 3, ... abbilden.

Des Weiteren werden in dem Verfahren 200 in einem Schritt 210 Messdaten Sᵢ := S(tᵢ) der an verschiedenen Orten in dem Oberflächenabschnitt 115 angeordneten Sensoreinrichtungen 120a bis 120d, insbesondere Solaranlagen, für die verschiedenen Zeitpunkte tᵢ empfangen. Das Empfangen der Bilddaten Iᵢ := I(tᵢ) und der Messdaten Sᵢ kann insbesondere über eine Datenschnittstelle erfolgen, mit der einem Computer oder einer Multi-Computer-Plattform, der bzw. die das Verfahren 200 ausführt bzw. ausführen soll, die Daten Iᵢ und Sᵢ zugeführt werden können.

Um ein etwaiges späteres Scheitern (Leerlaufen) des Verfahrens 200 im Falle der Abwesenheit eines Mediums 110 von vorneherein zu vermeiden, wird in einem weiteren Schritt 215 wird geprüft, ob sowohl in den Bilddaten Iᵢ als auch in den Messdaten Sᵢ jeweils ein Abbild 135 bzw. Schatten 130 eines Mediums 110 (zum Beispiel Wolke) repräsentiert ist. Wenn dies nicht der Fall ist (215 - nein), dann verzweigt das Verfahren zurück zum Schritt 205. Andernfalls (215 - ja), erfolgt in einem Schritt 220 für jeden Zeitpunkt tᵢ ein Abgleichen der jeweiligen Bildaufnahme Iᵢ mit den jeweils dazu korrespondierenden Messdaten Sᵢ einer bestimmten Sensoreinrichtung, z.B. der Sensoreinrichtung 120b, um dadurch festzustellen, welche Bildpunkte P in der Bildaufnahme Iᵢ bezüglich ihres Abbildungsinhalts bzw. jeweiligen Bildpunktwerts (Wolke bzw. keine Wolke abgebildet) zu den Messdaten Sᵢ korrespondieren.

Eine solche Korrespondenz tritt für einen Zeitpunkt tᵢ auf, wenn eine Übereinstimmung bezüglich des Vorhandenseins bzw. Fehlens eines jeweiligen sowohl in den Bilddaten Iᵢ als auch in den Messdaten Sᵢ repräsentierten Abbilds eines etwaigen zum jeweiligen Aufnahmezeitpunkt in dem Strahlengang befindlichen Mediums 110 festgestellt wird. Dies ist insbesondere dann der Fall, wenn der gerade geprüfte Bildpunkt zu einem Abbild 135a des Mediums 110 in der Bildaufnahme Iᵢ gehört und zugleich ein auf das Vorhandensein des Mediums 110 zurückführbarer reduzierter Solarstrom an der Sensoreinrichtung 120b gemessen wurde, d.h. wenn diese im Schatten 130 (d.h. in dem durch die Messdaten Sᵢ repräsentierten Abbild des Mediums 110) liegt. Andersherum ist es aber auch der Fall, wenn der Bildpunkt nicht zum Abbild 135 gehört und der Solarstrom nicht auf eine Lage der Sensoreinrichtung 120b im Schatten 130 schließen lässt.

Um eine solche Korrespondenz festzustellen, kann gemäß einer möglichen Ausführungsform insbesondere die bereits oben genannte Transformation der Position der betrachteten Sensoreinrichtung 120b in die Bildaufnahme Iᵢ vorgenommen werden, sodass unmittelbar geprüft werden kann, ob die Position der Sensoreinrichtung 120b innerhalb des Umfangs des Abbilds des Mediums in der Bildaufnahme Iᵢ liegt.

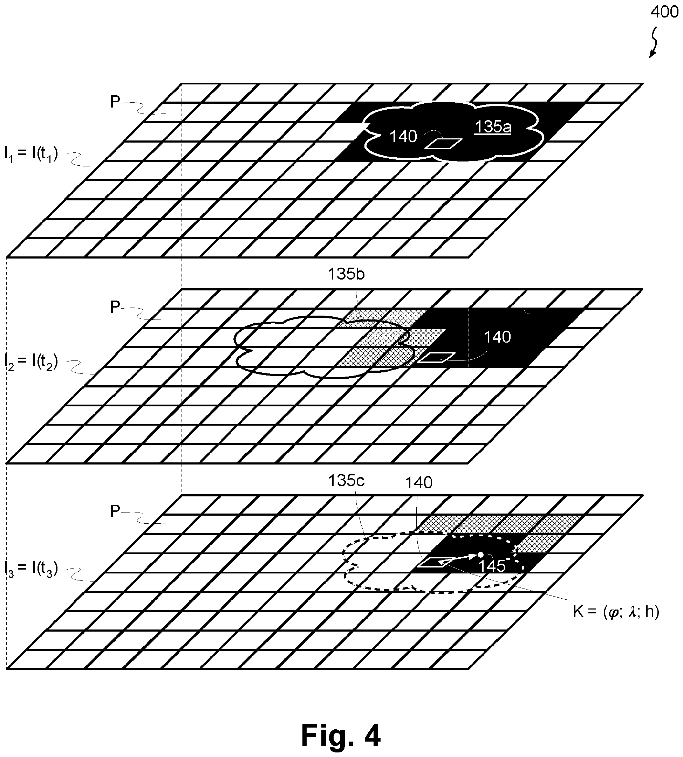

Mithilfe der Korrespondenzprüfung lassen sich in der jeweiligen Bildaufnahme Iᵢ diejenigen Bildpunkte identifizieren, die valide Kandidaten dafür sind, dass sie in dieser Bildaufnahme den Ort der Sensoreinrichtung 120b auf dem Oberflächenabschnitt 115 (mit-)abbilden. Das Abgleichen kann insbesondere iterativ auf Basis der zu verschiedenen Zeitpunkten tᵢ mit i = 1, 2, 3, ... gewonnenen Bilddaten Iᵢ und Messdaten Sᵢ erfolgen. Ein solcher iterativer Abgleich 300 wird im Weiteren unter Bezugnahme auf die Figuren 3 und 4 in größerem Detail erläutert werden.

Wenn der Abgleich im Schnitt 220 erfolgt ist, können auf Basis der im Rahmen des Abgleichs identifizierten Bildpunkte, die zu den Messwerten korrespondieren, die Bildaufnahmen bezüglich der Erdoberfläche verortet werden. Dazu werden die vorbekannten Orte der Messeeinrichtungen (bzw. Solaranlagen) aus den Messdaten herangezogen. Wenn beispielsweise in einem einfachen Fall ein einziger Bildpunkt einer Bildaufnahme als Repräsentant einer bestimmten Solaranlage identifiziert wurde, so kann diesem Bildpunkt der vorbekannte Ort dieser Solaranlage zugeordnet werden. Dies kann insbesondere bezüglich verschiedener Bildpunkte und entsprechend verschiedener zugeordneter Orte bzw. Solaranlagen erfolgen, sodass die Verortung auf Basis verschiedener Bildpunkte erfolgen kann, was insbesondere vorteilhaft ist, um nicht nur eine Position, sondern auch eine Orientierung bzw. Ausrichtung der Bildaufnahmen relativ zur Erdoberfläche mit guter Genauigkeit zu bestimmen.

Des Weiteren kann ein Schritt 230 vorgesehen sein, bei dem eine Spektralanalyse bezüglich der auf die Sensoreinrichtungen einfallenden Strahlung durchgeführt wird, um auf die Art der in dem Medium vorhandenen Materie zu schließen. So kann beispielsweise auf Basis der Spektralanalyse anhand eines für die Materie charakteristischen Spektrums festgestellt werden, ob es sich bei dem Medium um eine herkömmliche Wetterwolke (Wasserdampf oder Wassereiskristalle), um eine (Vulkan)Staubwolke oder eine Sandwolke handelt oder beispielsweise um Rauch aus einem Verbrennungsvorgang, z.B. in einer Industrieanlage.

Auf Basis der im Schnitt 225 verorteten Bildaufnahmen als Eingabedaten können nun in einem Schritt 235 unter Verwendung von einem oder mehreren meteorologischen Modellen Wettervorhersagedaten, insbesondere für den durch die Bildaufnahmen abgedeckten Oberflächenabschnitt 115, erzeugt und in einem weiteren Schritt 240 insbesondere zum Steuern einer technischen Anlage, wie beispielsweise eines Energieverteilungsnetzes oder einer Produktionsanlage oder eines Verkehrsnetzes genutzt werden. Beispielsweise kann in einem Schienennetz für die Eisenbahn eine Heizung von kritischer Infrastruktur, wie etwa von Weichen, auf Basis von im Rahmen der Wettervorhersagedaten vorausgesagten Temperaturverläufen an den jeweiligen Orten solcher Infrastruktur erfolgen. Auch kann der Strombedarf für den Zugbetrieb mit Elektrolokomotiven oder Triebwagen, der in der Regel temperaturabhängig ist, vorausgesagt und eine entsprechende Steuerung eines bahnbezogenen Energieversorgungsinfrastruktur entsprechend geplant und durchgeführt werden.

In den **Figuren 3** **und** **4** ist ein konkretes Ausführungsbeispiel für den interaktiven Abgleichsprozess 300 aus dem Verfahren 200 illustriert. Dabei wird in einem Schritt 305 zunächst der Wert eines Parameters m > 1 zur Festlegung eines Abbruchkriteriums für die Iteration festgelegt.

In einem Schritt 310, der auch mit dem Schritt 305 zusammenfallen kann, wird des Weiteren einerseits ein Startwert i:=1 für einen Index i zur Kennzeichnung verschiedener, insbesondere mit zunehmenden Wert von i aufeinanderfolgender, Zeitpunkte für die Erzeugung der Bildaufnahmen und Messungen und andererseits für eine erste digitale Bildaufnahme I₁ eine initiale Bildpunktmenge M₀ festgelegt. Die Bildpunktmenge M₀ kann insbesondere entsprechend dem vorliegenden Beispiel gleich der Menge M sämtlicher Bildpunkte P der Bildaufnahme I₁ sein.

**In** **Fig. 4** ist eine zeitliche Abfolge 400 von Bildaufnahmen und deren interaktiver Bildauswertung illustriert, wobei die Bildpunkte P jeweils als Pixel einer Pixelmatrix dargestellt sind, welche die jeweilige Bildaufnahme Iᵢ für den jeweiligen von drei aufeinanderfolgenden Zeitpunkten tᵢ mit i = 1, 2 bzw. 3 repräsentiert.

Nun kann im Abgleichsprozess 300 der erste Durchlauf der Iteration zum Startwert i = 1 erfolgen. Dabei wird im Schritt 315 ein Abgleich der ersten digitale Bildaufnahme I₁ mit den Messdaten S₁ für denselben (Aufnahme-bzw. Messzeitpunkt t₁) durchgeführt, wobei im Rahmen einer Prüfung festgestellt wird, welche der Bildpunkte in der Bildaufnahme I₁ einen Bildpunktwert aufweisen, der zu den Messdaten S₁ korrespondiert (vergleiche hierzu vorausgehenden Erläuterungen zu Fig. 2). Diejenigen Bildpunkte P, für die dies zutrifft, bilden die Menge M₁ als Teilmenge von M₀ und sind in Fig. 4 schwarz gefärbt, da hier der Fall illustriert ist, dass die hier speziell betrachtete Sensoreinrichtung 120b Messdaten liefert, welche auf das Vorhandensein eines Mediums 110 im Strahlengang 125 schließen lassen. In Fig. 4 ist wieder das Abbild 140 der Sensoreinrichtung 120b in die Bildaufnahme transformiert dargestellt, während mit dem Bezugszeichen 135a die Abbildung des Mediums 110 in dieser Bildaufnahme I₁ gekennzeichnet ist. Bei den schwarz dargestellten Bildpunkten der Abbildung 135a handelt es sich somit um solche Bildpunkte P, die das Medium 110, welches hier als Wolke dargestellt ist, (mit-) abbilden, was insbesondere mittels eines jeweiligen Bildwerts erfolgen kann, der einer geringeren Helligkeit entspricht, als dies bei Bildpunkten der Fall ist, welche das Medium nicht (mit-)abbilden.

Gemäß dem Flussdiagramm aus Fig. 3 wird nun in einem weiteren Schritt 320 geprüft,, ob die verbliebene Anzahl von (schwarzen) Bildpunkten, d. h. die Stärke |M₁| der Menge M₁, größer oder gleich dem Parameter m ist. Ist dies der Fall (320 - ja), so wird der Index i im Schritt 325 inkrementiert und im Rahmen der Iteration der nächste Durchlauf mit einer erneuten Durchführung des Schritts 315 gestartet. Der Ablauf dieser und gegebenenfalls jeder weiteren Iteration spricht dem vorausgehend für die erste Iteration beschriebenen Ablauf.

Ist dagegen nach einer der Iterationen das Abbruchkriterium erfüllt (320 - nein) wird im Schritt 330 je Sensoreinrichtung ihre jeweilige Position in den Bildaufnahmen durch jeweilige Mittelung der Positionen der nach dem letzten Durchlauf der Iteration verbliebenen Bildpunkte P in der Teilmenge Mᵢ bestimmt. Die so bestimmte Position wird sodann der Sensoreinrichtung als Position in der bzw. den Bildaufnahme(n) zugeordnet. Dementsprechend kann in einem weiteren Schritt 335 zumindest eine der Bildaufnahmen Iᵢ bezüglich der Erdoberfläche anhand des aus den Messdaten Sᵢ vorbekannten Orts der jeweiligen Sensoreinrichtung und der ihr im Schnitt 330 bestimmten und zugeordneten Position verortet werden.

Nun wieder bezugnehmend auf Fig. 4, ist bei der Bildaufnahme I₂ für den Zeitpunkt t₂ zu sehen, dass zu diesem Zeitpunkt das Medium 110 relativ zur Bildaufnahme gewandert ist und teilweise durch andere Bildpunkte als Abbild 135b repräsentiert wird. Die Sensoreinrichtung 120b liegt nun nicht mehr im Schatten des Mediums, d. h. sie misst einen entsprechend hohen Solarstrom als Messignal. Nach der zweiten Iteration kommen somit nur noch solche Bildpunkte in der Bildpunktmatrix als Kandidaten für die Position der Sensoreinrichtung 120b infrage (Menge M₂), die in I₁ das Medium 110 (mit-) abbilden (Menge M₁) und in der Bildaufnahme I₂ das Medium 110 nicht (mit-) abbilden. In Fig. 4 sind diese verbliebenen Bildpunktkandidaten in I₂ schwarz gefärbt, während die gegenüber I₁ weggefallenen Kandidaten dort schraffiert dargestellt sind.

In der dritten in Fig. 4 illustrierten Iteration ist das Medium 110 weitergewandert, sodass es in Bildaufnahme I₃ an einer wiederum anderen Stelle der Bildpunktmatrix als Abbild 135c abgebildet ist. Das Messsignal bzw. die Messdaten der Sensoreinrichtung 120b liefern nun wieder einen reduzierten Solarstrom, was auf eine Abdeckung (Schattenwurf) durch das Medium 110 schließen lässt. Nun verbleiben nach der dritten Iteration nur noch solche (in I₃ schwarz gefärbte) Bildpunkte als Kandidaten (Menge M₃), die einerseits nach der zweiten Iteration als Bildpunktkandidaten übrig blieben (Menge M₂) und andererseits zugleich in I₃ das Abbild 135c (mit-) abbilden.

Da die dritte Iteration im vorliegenden Beispiel zugleich die letzte Iteration darstellt (Enditeration), nach der das Abbruchskriterium im Schritt 320 erfüllt ist (320 - nein), wird nun aus den in der Menge M₃ verbliebenen Bildpunkten durch Berechnung des (insbesondere geometrischen) Schwerpunkts 145 dieser Bildpunktverteilung eine Position der Sensoreinrichtung 120b in der Bildaufnahme I₃ bestimmt. Sie wird verortet, indem ihr die für dies Sensoreinrichtung aus den Messdaten vorbekannte Ortsposition K auf der Erdoberfläche zugeordnet wird, die insbesondere durch entsprechende Koordinaten, beispielsweise einen Längengrad *ϕ,* einen Breitengrad *λ* und eine Höhe h über Normalnull, repräsentiert werden kann.

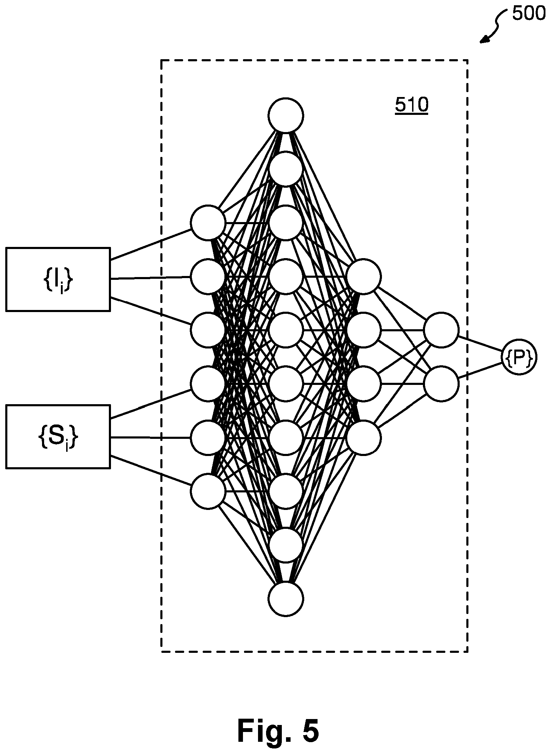

**Fig. 5** zeigt schematisch ein Diagramm 500 zur prinzipiellen Illustration einer auf Maschinenlernen, insbesondere auf Basis eines (exemplarischen) künstlichen neuronalen Netzes 510, beruhenden Auswertung einer Menge {Iᵢ} von Bildaufnahmen und von korrespondierenden, mittels einer Sensoreinrichtung erfassten Menge von Messdaten {Sᵢ} für eine Menge {tᵢ} von Aufnahme- bzw. Messzeitpunkten tᵢ zur Bestimmung einer Menge {P} aus einem oder mehreren Bildpunkten P, die als Kandidaten dafür in Frage kommen, die Position der Sensoreinrichtung in den Bildaufnahmen zu repräsentieren, d.h. diese Sensoreinrichtung (mit-)abzubilden.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird.

### BEZUGSZEICHENLISTE

- 100: Szenario zur sensorischen Erfassung von Bildaufnahmen I und Messdaten M
- 105: Aufnahmeeinrichtung, insbesondere satelliten- oder flugzeuggestützt
- 110: Medium, insbesondere Wolke
- 115: von Bildaufnahme I erfasster Oberflächenabschnitt eines Himmelskörpers, insbesondere der Erde
- 120a-d: Sensoreinrichtungen, insbesondere Solaranlagen
- 125: elektromagnetische Strahlung, insbesondere Sonnenstrahlung
- 125a-d: verschiedene Strahlen oder Strahlenbündel der Strahlung 125
- 130: durch die Dämpfung der elektromagnetischen Strahlung durch das Medium 110 hervorgerufener Schatten auf dem Oberflächenabschnitt
- 135: Abbildung des Mediums in der Bildaufnahme I
- 135a: Abbildung des Mediums in der Bildaufnahme I₁
- 135b: Abbildung des Mediums in der Bildaufnahme I₂
- 135c: Abbildung des Mediums in der Bildaufnahme I₃
- 140: in die Bildaufnahme I bzw. lᵢ transformierte Lage der Sensoreinrichtung 120b
- 145: Schwerpunkt der nach der Enditeration verbliebenen Bildpunkte
- 200: Verfahren zum Verorten einer oder mehrerer Bildaufnahmen
- 205-240: Verfahrensschritte des Verfahrens 200
- 300: iterativer Abgleich von Bilddaten und Messdaten,
- 305-335: Verfahrensschritte der iterativen Bildauswertung 300
- 400: Abfolge von Bildaufnahmen und deren iterativer Abgleich mit Messdaten
- 500: maschinen-lernen-basierte Auswertung von Bildaufnahmen und Messdaten
- 510: (künstliches) neuronales Netz (schematisch)
- I: Bildaufnahme bzw. Bilddaten
- I₁, I₂, I₃: Bildaufnahmen bwz. Bilddaten zu verschiedenen Zeitpunkten
- i: Index zur Kennzeichnung verschiedener Zeitpunkte zur Erzeugung der Bildaufnahmen und Messungen
- m: Parameter zur Festlegung eines Abbruchkriteriums für den iterativen Abgleich
- t, tᵢ: Zeitvariable bzw. Aufnahmezeitpunkte
- K: Koordinaten des vorbekannten Orts der Sensoreinrichtung 120b
- *ϕ*: Längengrad
- *λ*: Breitengrad
- h: Höhe über Normal-Null (NN)
- Mᵢ: Bildpunktmengen bzw. Teilmengen
- P: Bildpunkt (Pixel) auf Bildaufnahme
- Sᵢ: Messdaten

## Patentansprüche

1. Verfahren (200) zum Verorten einer mittels zumindest einer bildgebenden Aufnahmeeinrichtung (105) von der Ferne aus aufgenommenen Bildaufnahme (I; I1, I2, I3) eines Objektes, insbesondere der Erde oder eines anderen natürlichen oder künstlichen Himmelskörpers oder eines Oberflächenabschnitts (115) davon, wobei das Verfahren (200) aufweist:
Erfassen (205) von Bilddaten (I; li), welche die Bildaufnahme (I; I1, I2, I3) und ihren Aufnahmezeitpunkt (t; ti) repräsentieren, wobei die erfassten Bilddaten (I;Ii) für verschiedene Aufnahmezeitpunkte (t; ti) jeweils eine digitale Bildaufnahme (I; I1, I2, I3) zumindest eines Oberflächenabschnitts (115) des Objekts aufweisen, in dem sich zumindest eine Sensoreinrichtung (120a-d) befindet; Erfassen (210) von Messdaten (Si), die für den Aufnahmezeitpunkt (t; ti) ein jeweiliges Messsignal der zuminedest einen Sensoreinrichtung (120a-d) repräsentieren, die in dem durch die Bildaufnahme (I; I1, I2, I3) erfassten Oberflächenabschnitt (115) des Objekts an einem Ort mit bekannter Ortsinformation (K) angeordnet und dabei konfiguriert ist, aus einem Strahlengang, der insbesondere zwischen der Sonne und der Sensoreinrichtung (120a-d) liegen kann, auf die Sensoreinrichtung (120a-d) einfallende elektromagnetische Strahlung (125) zu detektieren und das Messsignal in Abhängigkeit von der dabei detektierten Strahlung (125) zu generieren;
Abgleichen (220) der Bilddaten (I; li) und der Messdaten (Si), wobei ein durch die Bilddaten (I; li) repräsentiertes Abbild eines zumindest teilweise im Strahlengang der elektromagnetischen Strahlung (125) befindlichen Mediums (110) mit einem durch die Messdaten (Si) repräsentierten Abbild des Mediums (110) verglichen wird, um bezüglich ihres jeweiligen Abbildungsinhalts zueinander korrespondierende Abbildungsanteile der beiden Abbilder zu identifizieren; und Verorten (225) der Bildaufnahme (I; I1, I2, I3) bezüglich des Objekts mittels Bestimmen einer dem Ort der Sensoreinrichtung (120a-d) entsprechenden Position (145) in der Bildaufnahme (I; I1, I2, I3) auf Basis des Abgleichs und Zuordnen der Ortsinformation (K) zu dieser Position,
wobei das Verfahren (200) auf solche Weise mit mehreren Iterationen ausgeführt wird, dass:
verschiedene Iterationen jeweils zu einem anderen der Aufnahmezeitpunkte (t; ti) korrespondieren;
in jeder Iteration nur solche Bildpunkte (P) der digitalen Bildaufnahme (I; I1, I2, I3) zur weiteren Verarbeitung in der jeweils nächstfolgenden Iteration beibehalten werden, bei denen in der jeweils aktuellen Iteration und gegebenenfalls allen vorangegangenen Iterationen im Rahmen des Abgleichens der Bilddaten (I; li) und der Messdaten (Si) für den zugehörigen Aufnahmezeitpunkt (t; ti) und die Sensoreinrichtung (120a-d) eine Übereinstimmung bezüglich der jeweiligen Abbildungsinhalte im Hinblick auf ein Vorhandensein bzw. Fehlen eines etwaigen zum jeweiligen Aufnahmezeitpunkt (t; ti) in dem Strahlengang befindlichen Mediums (110) festgestellt wurde; und
nach einer bestimmten Enditeration die Position der Sensoreinrichtung (120a-d) in der Bildaufnahme (I; I1, I2, I3) auf Basis zumindest eines der bis dahin noch verbliebenen Bildpunkte (P) bestimmt wird.

2. Verfahren (200) nach Anspruch 1, wobei die Enditeration bestimmt wird als eine der folgenden:
- die letzte Iteration, nach der noch zumindest m Bildpunkte (P) verblieben sind, wobei m ≥ 1 gilt;
- die k-te Iteration, nach der noch zumindest m Bildpunkte (P) verblieben sind, wobei m und k natürliche Zahlen sind und m ≥ 1, k > 1 gilt.

3. Verfahren (200) nach einem der vorausgehenden Ansprüche, wobei, wenn anhand der Bilddaten (I; li) und/oder der Messdaten (Si) das Vorhandensein eines strahlungsschwächenden Mediums (110) in dem Strahlengang festgestellt wird, die auf die Sensoreinrichtung (120a-d) einfallende Strahlung (125) einer Spektralanalyse (230) unterzogen wird, um auf die Art der in dem Medium (110) vorhandenen Materie zu schließen.

4. Verfahren (200) nach einem der vorausgehenden Ansprüche, wobei das Verorten (225) der Bildaufnahme (I; I1, I2, I3) des Weiteren aufweist:
Bestimmen zumindest einer weiteren Ortsinformation für eine weitere ausgewählte Position in der Bildaufnahme (I; I1, I2, I3) in Abhängigkeit von der für die Sensoreinrichtung (120a-d) bestimmten Position (145) und ihrer zugeordneten bekannten Ortsinformation (K).

5. Verfahren (200) nach einem der vorausgehenden Ansprüche, des Weiteren aufweisend:
Verwenden von Daten, welche die verortete Bildaufnahme (I; I1, I2, I3) einschließlich der zugeordneten Ortsinformationen (K) repräsentieren, als Eingangsdaten für ein oder mehrere meteorologische Modelle, um darauf basierend eine Wettervorhersage für zumindest einen Teilbereich des von der Bildaufnahme (I; I1, I2, I3) abgedeckten Oberflächenabschnitts (115) des Objekts zu erstellen und diese Wettervorhersage repräsentierende Wettervorhersagedaten zu erzeugen und bereitzustellen (235).

6. Verfahren (200) nach Anspruch 5, des Weiteren aufweisend: Steuern oder Konfigurieren (240) einer technischen Vorrichtung oder eines technischen Systems in Abhängigkeit von den Wettervorhersagedaten.

7. Verfahren (200) nach Anspruch 6, wobei das Steuern oder Konfigurieren (240) bezüglich einer oder mehrerer Funktionalitäten oder Konfigurationsmöglichkeiten der folgenden technischen Vorrichtungen bzw. System erfolgt:
- eine Anlage oder ein System zur Herstellung von Produkten;
- eine Anlage oder ein System zur Gewinnung oder Verteilung von elektrischer Energie;
- ein Verteilnetz für Energie;
- ein Verkehrsweg oder Verkehrsnetz;
- ein Fahrzeug oder ein Verbund von miteinander auf koordinierte Weise zu bewegenden Fahrzeugen;

8. Verfahren (200) nach einem der vorausgehenden Ansprüche, wobei das Abgleichen der Bilddaten (I; li) und der Messdaten (Si) unter Verwendung eines maschinenlernen-basierten Verfahrens (500) mit den Bilddaten (I;Ii) und den Messdaten (Si) als Eingangsdaten erfolgt.

9. Verfahren (200) nach einem der Ansprüche 5 bis 7 und Anspruch 8, wobei die Wettervorhersagedaten für einen bestimmten Vorhersagezeitraum zusammen mit dazu korrespondierenden tatsächlich gemessenen Wetterdaten als Trainingsdaten oder Validierungsdaten für das weitere Trainieren bzw. Validieren des maschinenlernen-basierten Verfahrens (500) eingesetzt werden.

10. Verfahren (200) nach Anspruch 8 oder 9, wobei dem maschinenlernen-basierten Verfahren (500) zumindest ein Klassifikationskriterium als Eingangsgröße zur Verfügung gestellt wird, anhand dessen gegebenenfalls ein sowohl in den Bilddaten (I; li) als auch in den Messdaten (Si) repräsentiertes Abbild des Mediums (110) seiner Art nach klassifiziert werden kann.

11. Verfahren (200) nach Anspruch 1, wobei das Verfahren (200) nach einem der vorausgehenden Ansprüche bezüglich einer Mehrzahl von an verschiedenen Orten auf dem Objekt befindlichen Sensorvorrichtungen ausgeführt wird, und das Verorten der Bildaufnahme (I; I1, I2, I3) entsprechend auf Basis der Bestimmung der den jeweiligen Orten der Sensoreinrichtungen (120a-d) entsprechenden Positionen in der Bildaufnahme (I; I1, I2, I3) mittels des Abgleichs und des Zuordnens der jeweiligen Ortsinformationen der Sensoreinrichtungen (120a-d) zu der für sie jeweils bestimmten Position erfolgt.

12. Verfahren (200) nach Anspruch 11, wobei zumindest eine der Sensorvorrichtungen eine Solaranlage aufweist, mit der das jeweils zugehörige Messsignal in Abhängigkeit von der von der Solaranlage zum jeweiligen Aufnahmezeitpunkt (t; ti) generierten elektrischen Energie erzeugt wird.

13. Verfahren (200) nach einem der vorausgehenden Ansprüche, wobei das Erfassen der Bilddaten (I; li) ein Erfassen von Bildmaterial bezüglich des Objekts umfasst, das mittels einer von einem Fluggerät, einem Raumfahrzeug oder einem Satelliten getragenen Aufnahmevorrichtung erzeugt wurde.

14. Vorrichtung zum Verorten einer mittels zumindest einer bildgebenden Aufnahmeeinrichtung (105) von der Ferne aus aufgenommenen Bildaufnahme (I; I1, I2, I3) eines Objektes, insbesondere der Erde oder eines anderen natürlichen oder künstlichen Himmelskörpers oder eines Oberflächenabschnitts (115) davon, wobei die Vorrichtung konfiguriert ist, das Verfahren (200) gemäß einem der vorausgehenden Ansprüche auszuführen.

15. Computerprogramm oder nicht-flüchtiges computerlesbares Speichermedium, mit Anweisungen, die bei ihrer Ausführung auf einem Computer oder einer Multi-Computer-Plattform bewirken, dass dieser bzw. diese das Verfahren (200) nach einem der Ansprüche 1 bis 13 ausführt.

## Claims

1. A method (200) of locating an image recording (I; I1, I2, I3) of an object, in particular of the Earth or of another natural or artificial celestial body or of a surface portion (115) thereof, recorded by means of at least one imaging recording device (105) from a distance, wherein the method (200) comprises:
acquiring (205) image data (I; li) which represent the image recording (I; I1, I2, I3) and its point in time of recording (t; ti), wherein the recorded image data (I; li) comprise, for different points in time of recording (t; ti), a respective digital image recording (I; I1, I2, I3) of at least one surface portion (115) of the object in which at least one sensor device (120a-d) is located;
acquiring (210) measurement data (Si) which represent, for the point in time of recording (t; ti), a respective measurement signal of the at least one sensor device (120a-d) which is arranged in a surface portion (115) of the object, captured by means of the image recording (I; I1, I2, I3), at a location with known location information (K) and which in this context is configured to detect electromagnetic radiation (125) which is incident on the sensor device (120a-d) from an optical path, which can in particular be located between the sun and the sensor device (120a-d), and to generate the measurement signal as a function of the radiation (125) detected in the course of this; matching (220) the image data (I; li) and the measurement data (Si), wherein an image of a medium (110) which is at least partially located in the optical path of the electromagnetic radiation (125), which image is represented by the image data (I; li), is compared with an image of the medium (110), which image is represented by the measurement data (Si), in order to identify, with respect to their respective image content, mutually corresponding image portions of the two images; and
locating (225) the image recording (I; I1, I2, I3) with respect to the object by means of a determination of a position (145) in the image recording (I; I1, I2, I3) which corresponds to the location of the sensor device (120a-d) on the basis of the matching, and an associating of the location information (K) with this position,
wherein the method (200) is carried out with multiple iterations in such a manner that:
different iterations each correspond to a different one of the points in time of recording (t; ti);
in each iteration, only those pixels (P) of the digital image recording (I; I1, I2, I3) are retained for the further processing in the respective next iteration for which, in the respective current iteration and, if applicable, in all preceding iterations, within the framework of the matching of the image data (I; li) and the measurement data (Si) for the associated point in time of recording (t; ti) and the sensor device (120a-d), a match has been established with regard to the respective image contents with respect to a presence or absence, respectively, of a medium (110), which may be present in the optical path at the respective point in time of recording (t; ti); and
after a certain final iteration, the position of the sensor device (120a-d) in the image recording (I; I1, I2, I3) is determined on the basis of at least one of the pixels (P) still remaining up to that point in time.

2. The method (200) in accordance with claim 1, wherein the final iteration is determined as one of the following:
- the last iteration after which at least m pixels (P) remain, where m ≥ 1;
- the kth iteration after which at least m pixels (P) remain, where m and k are natural numbers and m ≥ 1, k > 1.

3. The method (200) in accordance with any one of the preceding claims, wherein, when, on the basis of the image data (I; li) and / or the measurement data (Si), the presence of a radiation attenuating medium (110) in the optical path is detected, the radiation (125) which is incident on the sensor device (120a-d) is subjected to a spectral analysis (230) in order to infer the type of the matter which is present in the medium (110).

4. The method (200) in accordance with any one of the preceding claims, wherein the locating (225) of the image recording (I; I1, I2, I3) further comprises:
determining at least one further item of location information for a further selected position in the image recording (I; I1, I2, I3) as a function of the position (145) determined for the sensor device (120a-d) and its associated known location information (K).

5. The method (200) in accordance with any one of the preceding claims, further comprising:
using data which represent the image recording which has been located (I; I1, I2, I3), including the associated location information (K), as input data for one or more meteorological models in order to generate a weather forecast based thereon for at least a partial area of the surface portion (115) of the object covered by the image recording (I; I1, I2, I3) and to generate, and make available (235), weather forecast data which represent this weather forecast.

6. The method (200) in accordance with claim 5, further comprising: controlling or configuring (240) a technical device or a technical system as a function of the weather forecast data.

7. The method (200) in accordance with claim 6, wherein the controlling or configuring (240) is carried out with respect to one or more functionalities or configuration options of the following technical devices or the following technical system:
- a facility or a system for the manufacture of products;
- a facility or a system for the generation or distribution of electrical energy;
- a distribution network for energy;
- a transport route or a transport network;
- a vehicle or a group of vehicles which are to be moved together in a coordinated manner.

8. The method (200) in accordance with any one of the preceding claims, wherein the matching of the image data (I; li) and of the measurement data (Si) is carried out using a method which is based on machine learning (500), with the image data (I; li) and the measurement data (Si) being used as input data.

9. The method (200) in accordance with any one of the claims 5 to 7 and claim 8, wherein the weather forecast data for a specific forecast period together with actual measured weather data corresponding thereto are used as training data or validation data for the further training or validation of the method based on machine learning (500).

10. The method (200) in accordance with claim 8 or 9, wherein at least one classification criterion is made available to the method based on machine-learning (500) as an input variable, on the basis of which, if applicable, an image of the medium (110) represented in the image data (I; li) as well as in the measurement data (Si) can be classified in accordance with its type.

11. The method (200) in accordance with claim 1, wherein the method (200) in accordance with any one of the preceding claims is carried out with respect to a plurality of sensor devices which are located at different locations on the object, and the locating of the image recording (I; I1, I2, I3) is carried out in a corresponding manner on the basis of the determination of the positions in the image recording (I; I1, I2, I3) which correspond to the respective locations of the sensor devices (120a-d) by means of the matching and the associating of the respective location information of the sensor devices (120a-d) to the position respectively determined for them.

12. The method (200) in accordance with claim 11, wherein at least one of the sensor devices comprises a solar installation with which the respective associated measurement signal is generated as a function of the electrical energy which is generated by the solar installation at the respective point in time of recording (t; ti).

13. The method (200) in accordance with any one of the preceding claims, wherein the capturing of the image data (I; li) comprises the capturing of image material in relation to the object which image material has been generated by means of a recording device which is carried by an aerial vehicle, a space vehicle or a satellite.

14. A device for locating an image recording (I; I1, I2, I3) of an object, in particular of the Earth or of another natural or artificial celestial body or of a surface portion (115) thereof, recorded by means of at least one imaging recording device (105) from a distance, wherein the device is configured to carry out the method (200) in accordance with any one of the preceding claims.

15. A computer program or a non-volatile computer readable storage medium which comprises instructions which, when they are being executed on a computer or on a multi-computer platform, cause the computer or the multi-computer platform to carry out the method (200) in accordance with any one of the claims 1 to 13.

## Revendications

1. Procédé (200) de localisation d'une capture d'image (1 ; 11, 12, 13), prise à distance au moyen **d'au** moins un système d'imagerie (105), d'un objet, en particulier de la Terre ou d'un autre corps céleste naturel ou artificiel ou d'une portion de surface (115) de celui-ci, dans lequel le procédé (200) présente :
la détection (205) de données d'image (l ; li), qui représentent la capture **d'image** (1 ; 11, 12, 13) et son moment de capture (t ; ti), dans lequel les données d'image détectées (1 ; li) présentent pour différents moments de capture (t ; ti) respectivement une capture d'image numérique (1 ; 11, 12, 13) **d'au** moins une portion de surface (115) de l'objet dans laquelle se trouve au moins un système capteur (120a-d) ; la détection (210) de données de mesure (Si), qui représentent pour le moment de capture (t ; ti) un signal de mesure respectif de l'au moins un système capteur (120a-d) qui est disposé, dans la portion de surface (115) de l'objet détectée par la capture d'image (1 ; 11, 12, 13),
sur un emplacement avec une information de localisation connue (K) et qui est configuré dans ce cadre pour détecter un rayonnement électromagnétique (125) incident sur le système de capteur (120a-d) à partir d'un trajet optique qui peut se trouver en particulier entre le soleil et le système capteur (120a-d) et pour générer le signal de mesure en fonction du rayonnement (125) détecté ce faisant ; la comparaison (220) des données d'image (1 ; li) et des données de mesure (Si), dans lequel une image d'un milieu (110) se trouvant au moins en partie sur le trajet optique du rayonnement électromagnétique (125) représentée par les données d'image (1 ; li) est comparée à une image du milieu (110) représentée par les données de mesure (Si) pour identifier des parties d'image des deux images correspondantes l'une à l'autre par rapport à leur contenu d'image respectif ; et la localisation (225) de la capture d'image (l ; 11, 12, 13) par rapport à l'objet en déterminant une position (145) correspondant à l'emplacement du système capteur (120a-d) dans la capture d'image (1 ; 11, 12, 13) sur la base de la comparaison et de l'association de **l'information** de localisation (K) à cette position,
dans lequel le procédé (200) est exécuté avec plusieurs itérations de telle manière que :
différentes itérations correspondent respectivement à un autre des moments de capture (t ; ti) ;
dans chaque itération, seuls les points d'image (P) de la capture d'image numérique (1 ; 11, 12, 13) sont conservés pour le traitement ultérieur dans l'itération suivante respective, pour lesquels dans l'itération respectivement du moment et, le cas échéant, dans toutes les itérations précédentes dans le cadre de la comparaison des données d'image (1 ; li) et des données de mesure (Si) pour le moment de capture (t ; ti) associé et le système capteur (120a-d), une concordance a été constatée en ce qui concerne les contenus d'image respectifs eu égard à la présence ou l'absence d'un éventuel milieu (110) se trouvant sur le trajet optique au moment de capture respectif (t ; ti) ; et
après une certaine dernière itération finale, la position du système capteur (120a-d) dans la capture d'image (1 ; 11, 12, 13) est déterminée sur la base d'au moins un des points d'image (P) restants jusqu'alors.

2. Procédé (200) selon la revendication 1, dans lequel l'itération finale est déterminée comme l'une des suivantes :
- la dernière itération après laquelle il reste encore au moins m points d'image (P), dans lequel m ≥ 1 ;
- la k^{-ième} itération après laquelle il reste encore au moins m points d'image (P), dans lequel m et k sont des nombres naturels et m ≥ 1, k > 1.

3. Procédé (200) selon l'une quelconque des revendications précédentes, dans lequel, lorsque la présence d'un milieu (110) atténuant les rayonnements est constatée sur le trajet optique à l'aide des données d'image (1 ; li) et/ou des données de mesure (Si), le rayonnement (125) incident sur le système capteur (120a-d) est soumis à une analyse spectrale (230) pour conclure à la nature de la matière présente dans le milieu (110).

4. Procédé (200) selon l'une quelconque des revendications précédentes, dans lequel la localisation (225) de la capture d'image (1 ; 11, 12, 13) présente en outre :
la détermination d'au moins une autre information de localisation pour une autre position sélectionnée dans la capture d'image (1 ; 11, 12, 13) en fonction de la position (145) déterminée pour le système capteur (120a-d) et de son information de localisation connue (K) associée.

5. Procédé (200) selon l'une quelconque des revendications précédentes, présentant en outre :
l'utilisation de données, qui représentent la capture d'image (1 ; 11, 12, 13) localisée, y compris les informations de localisation associées (K), en tant que données d'entrée pour un ou plusieurs modèles météorologiques pour créer sur cette base une prévision météorologique pour au moins une zone partielle de la portion de surface (115) de l'objet couverte par la capture d'image (I ; I1, I2, I3) et générer et fournir des données de prévision météorologique représentant ladite prévision météorologique (235).

6. Procédé (200) selon la revendication 5, présentant en outre : la commande ou la configuration (240) un dispositif technique ou d'un système technique en fonction des données de prévision météorologique.

7. Procédé (200) selon la revendication 6, dans lequel la commande ou la configuration (240) est effectuée en ce qui concerne une ou plusieurs fonctionnalités ou possibilités de configuration des dispositifs ou systèmes techniques qui suivent :
- une installation ou un système de fabrication de produits ;
- une installation ou un système de production ou de distribution d'énergie électrique ;
- un réseau de distribution d'énergie ;
- une voie ou un réseau de transport ;
- un véhicule ou un ensemble de véhicules à déplacer de manière coordonnée.

8. Procédé (200) selon l'une quelconque des revendications précédentes, dans lequel la comparaison des données d'image (1 ; li) et des données de mesure (Si) s'effectue en utilisant un procédé (500) basé sur l'apprentissage automatique avec les données d'image (l ; li) et les données de mesure (Si) en tant que données d'entrée.

9. Procédé (200) selon l'une quelconque des revendications 5 à 7 et la revendication 8, dans lequel les données de prévision météorologique pour une période prévisionnelle déterminée ainsi que les données météorologiques réellement mesurées correspondantes sont utilisées comme données d'entraînement ou de validation pour l'entraînement ou la validation ultérieurs du procédé (500) basé sur l'apprentissage automatique.

10. Procédé (200) selon la revendication 8 ou 9, dans lequel le procédé (500) basé sur l'apprentissage automatique dispose d'au moins un critère de classification en tant que grandeur d'entrée, à l'aide duquel une image du milieu (110) représentée à la fois dans les données d'image (1 ; li) et dans les données de mesure (Si) peut éventuellement être classifiée selon son type.

11. Procédé (200) selon la revendication 1, dans lequel le procédé (200) est réalisé selon l'une quelconque des revendications précédentes en ce qui concerne une multitude de systèmes capteurs se trouvant sur différents emplacements sur l'objet, et la localisation de la capture d'image (1 ; 11, 12, 13) est effectuée de manière correspondante sur la base de la détermination des positions correspondant aux emplacements respectifs des systèmes capteurs (120a-d) dans la capture d'image (1 ; 11, 12, 13) au moyen de la comparaison et de l'association des informations de localisation respectives des systèmes capteurs (120a-d) à la position respectivement déterminée pour eux.

12. Procédé (200) selon la revendication 11, dans lequel au moins un des dispositifs capteurs présente une installation solaire avec laquelle le signal de mesure respectivement associé est généré en fonction de l'énergie électrique générée par l'installation solaire au moment de capture (t ; ti) respectif.

13. Procédé (200) selon l'une quelconque des revendications précédentes, dans lequel la détection des données d'image (I ; li) comprend une détection de matériau d'imagerie concernant l'objet qui a été généré au moyen d'un dispositif de capture porté par un aéronef, un véhicule spatial ou un satellite.

14. Dispositif de localisation d'une capture d'image (1 ; 11, 12, 13) prise à distance au moyen d'au moins un système d'imagerie (105) d'un objet, en particulier de la Terre ou d'un autre corps céleste naturel ou artificiel ou d'une portion de surface (115) de celui-ci, dans lequel le dispositif est configuré pour exécuter le procédé (200) selon l'une quelconque des revendications précédentes.

15. Programme informatique ou support de stockage non volatil lisible par ordinateur, avec des instructions qui, lorsqu'elles sont exécutées sur un ordinateur ou une plateforme multi-ordinateur, amènent celui-ci ou celle-ci à exécuter le procédé (200) selon l'une quelconque des revendications 1 à 13.
